# EUROPEAN PATENT APPLICATION

(11) **EP 2 133 800 A1**
(43) Date of publication of application: **16.12.2009**
(21) Application number: 09156553.1
(22) Date of filing: 27.03.2009
(51) Int. Cl.: G06F 13/42

(54) **Data alignment and de-skew system and method for double data rate input data stream**

(30) Priority: 12.06.2008 US 138066
(71) Applicant: Honeywell International Inc., Morristown, NJ 07962 (US)
(72) Inventor: Caltagirone, Joseph, Morristown, NJ 07962-2245 (US); Parker, James Dewey, Morristown, NJ 07962-2245 (US)
(74) Representative: Buckley, Guy Julian

(57) **Abstract**

A system for aligning data is provided. The system comprises a demultiplexing component adapted to bifurcate a double data rate (DDR) data stream into first and second single data rate (SDR) data streams, a delay architecture adapted to generate delayed SDR data streams from the SDR data streams, a logic circuit adapted to analyze the SDR data streams and delayed SDR data streams to detect a predetermined bit pattern conveyed in the DDR data stream and to indicate detection of the predetermined bit pattern, and a data aligning component adapted to determine the number of intervening bits between occurrences of the predetermined bit pattern and to frame the intervening bits, thereby producing aligned data.

## Description

This invention was made with Government support under Subcontract TF0016 awarded by Lockheed Martin Space Systems Company. The Government has certain rights in this invention.

### TECHNICAL FIELD

The subject matter described herein generally relates to aligning streamed data, and more particularly relates to creating discrete data words and de-skewing serial data from a multiplexed input stream with both data and meta-data information.

### BACKGROUND

Streamed data can contain data bits, which form data words. Under certain circumstances, however, data bits associated with a particular clock cycle can be shifted to a different clock cycle at a receiving component, resulting in an unknown alignment of data bits or data words. As one example, the data bits forming the boundary of a certain data word can be offset from an accompanying synchronization or clock signal, resulting in misplaced data bits for the boundaries of the certain data word.

Misalignment of the data bits into incorrect data words can cause corruption in the data. One source of misalignment can be a difference in physical length between a wire transmitting the data stream and a wire transmitting the synchronization information. Alternatively, constantly changing delays through such wires, as a result, for example, of a change in environment, temperature, and supply voltage variation can offset the data and result in misaligned data and synchronization information or signals. Accordingly, it can be difficult to re-sync the data to form it into data words with the correct beginning and ending data bits.

Additionally, serial data transmitted as a stream of data bits can be skewed in time as compared to data transmitted in parallel. To de-skew data, a window of valid data, known as the data eye, must be found, which can require many clock cycles, depending on the number of bits in serial data devoted to indicating the beginning of a sequence of data.

### BRIEF SUMMARY

An apparatus is provided for a system for aligning data. The system comprises a demultiplexing component adapted to bifurcate a double data rate (DDR) data stream into a first single data rate (SDR) data stream and a second SDR data stream, a delay architecture coupled to the demultiplexing component, and adapted to generate a once-delayed first SDR data stream from the first SDR data stream, a once-delayed second SDR data stream from the second SDR data stream, and a twice-delayed second SDR data stream from at least one of the second SDR data stream and the once-delayed second SDR data stream, a logic circuit coupled to at least one of the delay architecture and the demultiplexing component, and adapted to analyze the first SDR data stream, the once-delayed first SDR data stream, and the once-delayed second SDR data stream to detect a predetermined bit pattern conveyed in the DDR data stream and to indicate detection of the predetermined bit pattern, and a data aligning component coupled to the delay architecture and the logic circuit, the data alignment component being adapted to determine the number of intervening bits between occurrences of the predetermined bit pattern and to frame the intervening bits, thereby producing aligned data.

A method of aligning data is also provided. The method comprises receiving a double data rate (DDR) data stream, demultiplexing the DDR data into first and second single data rate (SDR) data streams, delaying the first and second SDR data streams to create a once-delayed first SDR data stream and a once-delayed second SDR data stream, delaying the once-delayed second SDR data stream to create a twice-delayed second SDR data stream, inspecting the first SDR data stream, the once-delayed first SDR data stream, and the once-delayed second SDR data stream to detect a predetermined bit pattern conveyed in the DDR data stream, and establishing a segment of valid data in the DDR data stream in response to detecting the predetermined bit pattern.

Another method of aligning data is also provided. The method comprises receiving a first double data rate (DDR) data stream that conveys a periodic training pattern of bits, demultiplexing the first DDR data stream into first and second single data rate (SDR) data streams, and determining the number of bits between occurrences of the periodic training pattern of bits in the first DDR data stream; thereafter, receiving a second DDR data stream, demultiplexing the second DDR data stream into third and fourth SDR data streams, inspecting the third and fourth SDR data streams to detect occurrences of the training pattern of bits, and aligning the third and fourth SDR data streams by establishing boundaries between data segments in the second DDR data stream occurring at bit lengths equal to the number of bits between occurrences of the periodic training pattern of bits.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 is a schematic diagram of a data alignment system;

FIG. 2 is a timing diagram of an exemplary double data rate data stream including bit values;

FIG. 3 is a sequence diagram that illustrates the bit values of the double data rate data stream of FIG. 2;

FIG. 4 is a schematic representation of the demultiplexed bit values of the double data rate data stream of FIG. 3;

FIG. 5 is an illustration of a portion of a double data rate data stream;

FIG 6 is an illustration of the inputs of a logic circuit for a grouping of the portion of the double data rate data stream of FIG. 6;

FIG. 7 is an illustration of the inputs of a logic circuit for another grouping of the portion of the double data rate data stream of FIG. 6;

FIG. 8 is an illustration of the inputs of a logic circuit for another grouping of the portion of the double data rate data stream of FIG. 6;

FIG. 9 is a schematic diagram of another embodiment of a data alignment system; and

FIG. 10 is a flow chart that illustrates an embodiment of a data processing method.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The following detailed description is merely exemplary in nature and is not intended to limit the application and uses of the subject matter. Furthermore, there is no intention to be bound by any expressed or implied theory presented in the preceding technical field, background, brief summary or the following detailed description.

Techniques and technologies may be described herein in terms of functional and/or logical block components and various processing steps. It should be appreciated that such block components may be realized by any number of hardware, software, and/or firmware components configured to perform the specified functions. For example, an embodiment of a system or a component, such as a data recording component or sequence detection component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments may be practiced in conjunction with any number of data transmission protocols and that the system described herein is merely one suitable example.

For the sake of brevity, certain conventional techniques related to signal processing, data transmission, signaling, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the subject matter.

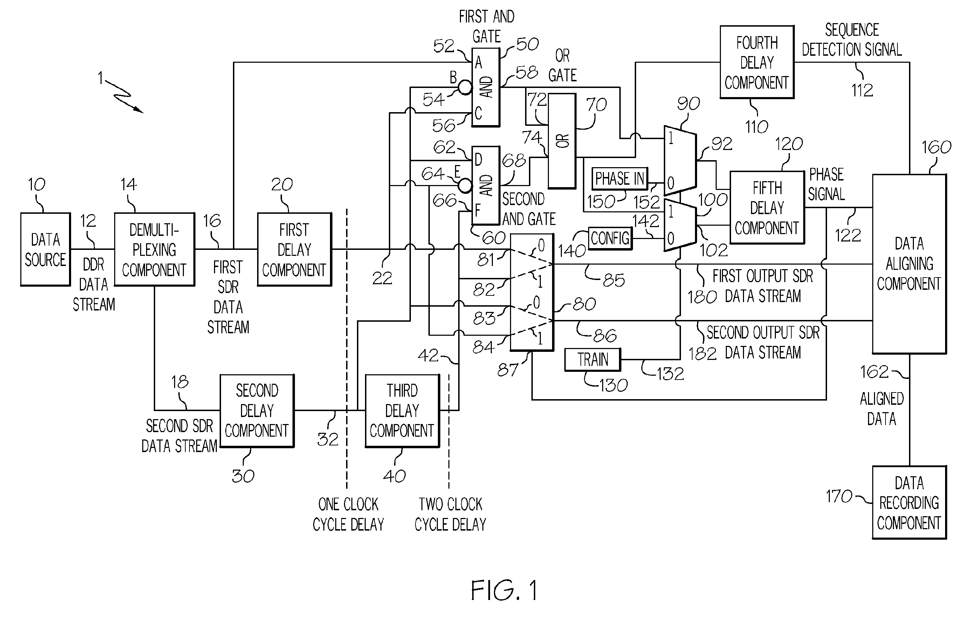

"Connected/Coupled" - The following description refers to elements or nodes or features being "connected" or "coupled" together. As used herein, unless expressly stated otherwise, "connected" means that one element/node/feature is directly joined to (or directly communicates with) another element/node/feature, and not necessarily mechanically. Likewise, unless expressly stated otherwise, "coupled" means that one element/node/feature is directly or indirectly joined to (or directly or indirectly communicates with) another element/node/feature, and not necessarily mechanically. Thus, although the schematic shown in FIG. 1 depicts one example arrangement of elements, additional intervening elements, devices, features, or components may be present in an embodiment of the depicted subject matter. Similarly, although couplings are shown and establish links between components for purposes of data transmission, the data or signals can include any signal that can propagate over a transmission medium such as electronic network channels, optical fibers, air, electromagnetic paths, or RF links. Additionally, the data or data segments may be downloaded via computer networks such as the Internet, an intranet, a LAN, or the like.

FIG. 1 illustrates an embodiment of a data alignment system 1, which generally includes, without limitation: a data source 10, a demultiplexing component 14, first, second, and third delay components 20, 30, 40 several logic components (e.g. a first AND gate 50, a second AND gate 60, and an OR gate 70), a data processing device 80, first and second multiplexers 90, 100, fourth and fifth delay components 110, 120, signal sources 130, 140, 150, a data aligning component 160, and a data recording component 170. The logic components can be collectively referred to as a logic complex, logic circuit, logic architecture, or logic arrangement, and so forth.

As used herein, receiving a signal from a device or element can be used to describe a condition where an indicator is sent from the device or element to the receiving component. Such an indicator can be a bit, a sequence or pattern of bits, a logic high value, or other event, process, or occurrence as appropriate to the embodiment. Thus, a component or element can detect an event and an indication of such detection can comprise transmitting a bit, pattern of bits, or a logic high value to another element coupled to it.

These elements are coupled together in an appropriate manner to accommodate the transfer of signals and data as needed to support the operation of system 1 as described herein. The system 1 can receive data from the data source 10. The data source 10 can be any component, system, or transmitting element adapted to transmit data using a double data rate (DDR) data stream. Typically, such sources can include sensors, such as accelerometers, temperature sensors, video sensors, and the like, though other sources are contemplated. As one non-limiting example of another data source, a communication device may be transmitting DDR data and act as a data source. Accordingly, a DDR data input 12 data stream can be provided to the demultiplexing component 14 from the data source 10.

The DDR data input 12 can be a training signal containing a predetermined pattern of bits in regular, intentionally-positioned intervals, or it can be sensory or other streamed data from a data source which comprises the predetermined pattern of bits. Typically, a training signal is first provided to the data aligning component 160 conveying configuration information useful to de-skewing a subsequent non-training data stream comprising a predetermined pattern of bits indicating boundaries between data segments, such as taps. For example, the training data can convey a regularly-spaced repetition of the predetermined pattern of bits in a serial data stream. The data aligning component 16 can receive inputs from various elements of the system 1 for detecting the interval between repetitions. Thereafter, having established the expected interval between predetermined patterns of bits, the data aligning component 160 can de-skew the non-training data by detecting the presence of the predetermined pattern of bits.

The demultiplexing component 14 can split, bifurcate, or otherwise process the DDR data input 12 into two single data rate (SDR) data streams 16, 18. The first and second SDR data streams 16, 18 together can contain all of the data conveyed in the DDR data input 12, in a de-coupled format, as later explained.

The first SDR data stream 16 can be provided to the first delay component 20, and also to an input of the first AND gate 50. The delay components 20, 30, 40, 110, 120 can be adapted to receive data from a data stream and retransmit the data after delaying it by one or more clock cycles. The output of the first delay component 20 is a once-delayed first SDR data stream 22. Similarly, the second SDR data stream 18 can be delayed by the second delay component 30 to produce a once-delayed second SDR data stream 32. The third delay component 40 can delay the once-delayed second SDR data stream 32 to produce a twice-delayed second SDR data stream 42.

In the illustrated embodiment, each delay component delays its respective input by one clock cycle. Other embodiments can use one or more clock cycles, include delays of two clock cycles, or three, four, and so on. Preferably, the data aligning component 160 can be adapted to align data properly in response to the varying delay amounts, as later described.

The logic architecture can comprise one or more appropriate components to inspect two SDR data streams for a predetermined bit pattern, as described below. In the illustrated embodiment of the system 1, the logic architecture is composed of first and second AND gates 50, 60, and an OR gate 70. The first AND gate 50 can comprise three inputs, a first, second, and third 52, 54, 56 respectively, which are also labeled as "A," "B," and "C" for later reference. For the illustrated embodiment, the second input 54 or "middle" input is an inverting input. Thus, a condition which activates the first AND gate 50 is one with a logic high level on the first and third inputs 52, 54 and a logic low level on the second input 54. In the context of the embodied system, such a condition would be the presence of a "1" bit, in the first SDR data stream 16 coupled to the first input 52, a null or "0" bit in the once-delayed second SDR data stream 32 coupled to the second input 54, and a "1" bit in the once-delayed first SDR data stream 22 coupled to the third input 56. Thus, the output of the first AND gate 50 will be a logic high level when a predetermined pattern of bits occurs in the data streams, each of which is a component of the DDR data stream 12. Accordingly, the first AND gate 50 is configured to detect a sequence or pattern of bits in the DDR data stream 12, and transmit a signal in response to detecting the sequence of pattern. The signal can be transmitted through the first AND gate output 58.

The second AND gate 60 is similarly configured, with first, second, and third inputs 62, 64, 66 additionally labeled "D," "E," and "F." As can be seen, the first input 62 is coupled to the once-delayed second SDR data stream 32, the second or middle input 64 is an inverted input coupled to the once-delayed first SDR data stream 22, and the third input 66 is coupled to the twice-delayed second SDR data stream 42. The output 68 of the second AND gate 60 is coupled to the OR gate 70. Thus, the second AND gate 60 can be configured to detect a similar pattern to the first AND gate 50, but in a portion of the DDR data stream 12, as described below. The first and second AND gates 50, 60 are both configured to transmit a signal to the OR gate 70 in response to detecting the predetermined pattern of bits.

The once-delayed first SDR data stream 22 and the once-delayed second SDR data stream 32 can be coupled to a linked or double multiplexer, called a data processing component 80, adapted primarily to selectively output two SDR data streams from four input SDR data streams. The data processing component 80 can have a plurality of inputs, such as the first through fourth inputs 81, 82, 83, 84 which are coupled to the once-delayed first SDR data stream 22, the once-delayed second SDR data stream 32, and the twice-delayed second SDR data stream 42, as shown.

The data processing component 80 can be adapted to select between the input SDR data streams and retransmit them at the first and second outputs 85, 86. Thus, as shown, the first output 85 can receive data from either the once-delayed first SDR data stream 22 or the twice-delayed second SDR data stream 42. Similarly, the second output 86 can receive data from either the once-delayed second SDR data stream 32 or the once-delayed first SDR data stream 22. The selection between input connections 81, 82, 83, 84 to the outputs 85, 86 can be global to the device 80. That is, the connection between one of a first set of inputs 81, 82 and an output 85 can correspond to a similar selection between one of a second set of inputs 83, 84 and a second output 86. Selection between a set of inputs can be made in response to a logic high or low value at a control input 87. Thus, when at a logic low at the control input 87, the first of each set of inputs 81, 83 can be connected to the corresponding output 85, 86. When a logic high value is received at the control input 87, both connections are shifted so the second of each set of inputs 82, 84 is connected to the corresponding output 85, 86. Accordingly, the logic value at the control input 87 can determine which SDR data stream is used for the first and second output SDR data streams 182, 184.

The OR gate 70 can receive a logic value on both the first and second inputs 72, 74. In response to a logic high value on either input 72, 74, or both, the OR gate 70 produces a logic high value at its output, which is coupled to the first and second multiplexers 90, 100. The OR gate 70 can be embodied as one or more different logical components as appropriate to the embodiment of the logic architecture and/or predetermined pattern of bits.

The first and second multiplexers 90, 100 can be coupled to various other components. The multiplexers 90, 100 can be adapted to switch between inputs in response to the logic value received at their respective control inputs. In the illustrated embodiment, the train signal source 130 is coupled to both multiplexers 90, 100.

Inspecting the first multiplexer 90, two switchable inputs are shown, marked with a "0" and a "1". The "0" input is coupled to the phase in signal source 150 and receives the phase in signal 152. The "1" input is coupled to the first AND gate 50 and receives the output from the AND gate 50. The first multiplexer 90 has a first multiplexer output 92, which conveys either the phase in signal 152 or the signal from the first AND gate 50, depending on whether the 0 or 1 input is selected.

Selection of the input or disposing the first multiplexer 90 in the preferred state can be done through the use of the train signal 132. In the first case, if a logic low is provided by the train signal source 130, the first multiplexer 90 outputs the phase in signal 152. In the second case, if the train signal source 130 is manipulated or operated or otherwise caused to provide a logic high level, the first multiplexer 90 instead outputs the signal generated by the first AND gate 50. In the second case, the first AND gate 50 can occasionally transmit a logic low level or value because the logical operation it performs is not satisfied by a state of the DDR data stream 12. During such periods, the first multiplexer 90 generates a logic low level signal at its output 92. When the train signal 132 and the first AND gate 50 are at logic high values, the first multiplexer 90 will produce a logic high level at its output 92 in response.

The second multiplexer 100 can operate in the same way, except that it has a 0 input receiving a config signal 142 from the config signal source 140. Similarly, the 1 input can be coupled to the OR gate 70. The state selector can still be the train signal 132 from the train signal source 130.

The fourth and fifth delay components 110, 120 can perform tasks similar to the previously-described delay components. The fourth delay component 110 is coupled to the OR gate 70 and can receive a data stream from the OR gate 70. The data stream can be delayed a single clock cycle or, in other embodiments, multiple clock cycles to produce a sequence detection signal 112. The fifth delay component 120 is preferably coupled to the outputs 92, 102 of both the multiplexers 90, 100. Although the fifth delay component 120 also delays the incoming signals from the multiplexers 90, 100, it also functions as an OR gate 70 to generate the phase signal 122. The phase signal 122 will be a logic high value when the output of the multiplexer 90 is a logic high, and/or when the output of the second multiplexer 100 is a logic high. Otherwise, the phase signal 122 is a logic low. The phase signal 122 can comprise a continuous stream of bits, or a single bit, depending on which the output of the multiplexers 90, 100.

The data aligning component 160 can be coupled to the fourth delay component 110 to receive a sequence detection signal 112 therefrom, coupled to the fifth delay component 120 to receive a phase signal 122 therefrom, and coupled to the data processing component 80 to receive the first and second output SDR data streams 180, 182 therefrom. The data aligning component 160 can also be coupled to the data recording component 170, and can exchange data therebetween.

The data aligning component 160 is preferably configured to receive the SDR data streams 180, 182, constituting the DDR data stream 12, and align the data in response to signals received from other sources. Data aligning can be done in accord with any of the methods described below, and can be independent of the data type, structure and/or composition of the logic architecture. After the data is aligned, it can be provided as aligned data 162 to the data recording component 170, which can store it for later use.

The data recording component 170 is coupled to the data aligning component 160 and adapted to receive and record data in any suitable method. The data or data segments can be stored in a processor-readable medium or retransmitted by a computer data signal embodied in a carrier wave over a transmission medium or communication path. The "processor-readable medium" or "machine-readable medium" which may be used by the data recording component 170 can include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, or the like.

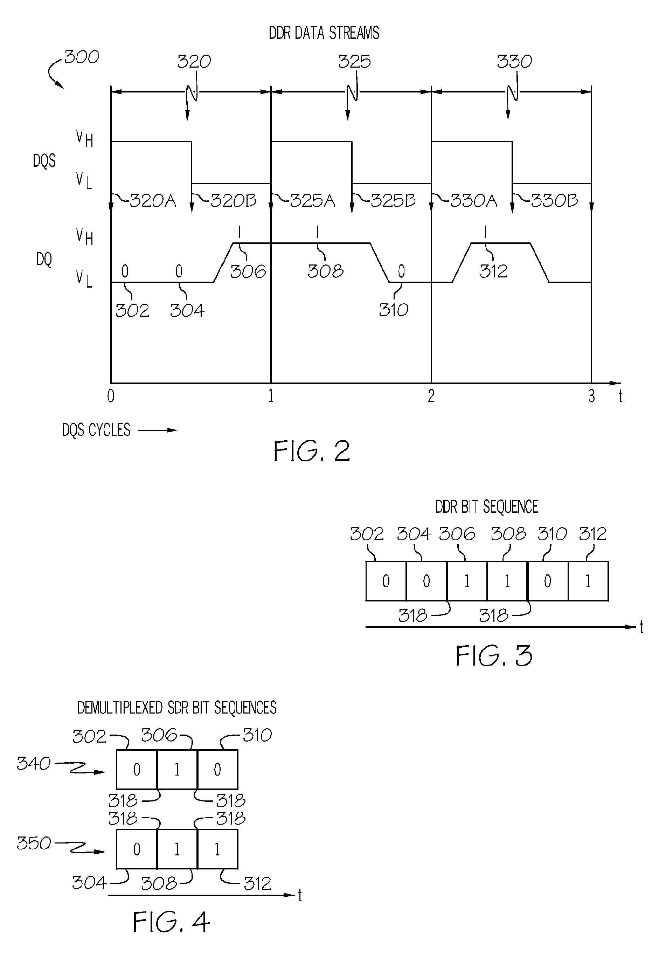

Further description of the operation of the system 1 can be better illustrated with examples after explanation of some data processing techniques involving the DDR data stream 12. DDR data streams can contain bits transmitted in accordance with any suitable DDR specification or standard. With reference to FIG. 2, a DDR data stream 300 is shown. The DDR data stream 300 can include any or all of the signals described below, as well as additional signals. The term "Double Data Rate" refers to the speed at which bits of information are transmitted relative to the "strobe" signal, denoted as the "DQS" signal. A data signal, denoted as the "DQ" signal, is also transmitted. Each signal is shown as changing between two voltages, a respective low voltage "V_{L}" and a respective high voltage "V_{H}" (the signals may, but need not, have the same high voltage levels and the same low voltage levels).

Three successive DQS cycles 320, 325, 330 are shown. The x-axis can represent advancing time, as indicated by the *t* and associated directional arrow. The integers listed along the x-axis can represent the periods of the first, second, and third successive DQS cycles 320, 325, 330. For each regular DQS cycle, the DQ signal can be evaluated at the transition of the DQS cycle from a low to high voltage - known as the rising edge or first portion of the signal - and from a high to a low voltage - known as the falling edge or the second portion of the signal. The DQ signal can be examined for a value either at its V_{L} or its V_{H} voltages. A DQ signal with a V_{L} value can be recorded as a null or "0" bit, while a DQ signal at the V_{H} value can be recorded as a non-null or "1" bit. Thus, in FIG. 2, a 0 bit 302 followed by a second 0 bit 304 are associated with the first DQS cycle 320. The first 0 bit 302 is associated with the rising edge 320A of the first DQS cycle 320. The second 0 bit 304 is associated with the falling edge 320B of the first DQS cycle 320. Similarly, two 1 bits 306, 308 are associated with the second DQS cycle 325. The DQ signal can be examined at the rising 325A and falling 325B edges of the second DQS cycle 325 to determine the values of the two bits 306, 308. A 0 bit 310 and 1 bit 312 are associated with the third DQS cycle 330, along the first portion or rising edge 330A and the second portion or falling edge 330B, respectively. The particular bit values shown in FIG. 2 are merely used for purposes of this description. In practice, any suitable bit pattern can be conveyed in the DQ signal. The first bit 302 can be considered associated with the first portion of the first DQS cycle 320, as the DQ signal is examined during the rising edge 320A of the first DQS cycle 320. Similarly, the second bit 304 can be considered associated with the second portion of the first DQS cycle 320, as the DQ signal is examined during the falling edge 320B of the cycle.

In a Single Data Rate (SDR) signal, the DQ signal cycles at the same frequency as the DQS signal, resulting in only one bit per DQS cycle, as opposed to two bits per DQS cycle. Accordingly, a DDR data stream can transmit twice as many bits in the same number of DQS cycles as a SDR data stream.

The data source 10 of FIG. 1 can be configured to provide DDR data comprising two types of input information, data bits and meta-data bits, such as header or synchronization bits. The DDR data stream can comprise a constant stream of bits during both the first and second halves of the DQS cycle, with a measurement point in the DQ signal occurring twice during the cycle, allowing for the conveyance of one bit of information per "half' or portion of the DQS cycle.

With reference to FIG. 3, the values of the DQ signal of the data stream 300 of FIG. 2 are depicted in a sequence of bits. The bits from the DQ signal are listed in sequence, with separators 318 indicating the change of cycle in the DQS signal. Accordingly, the 0 bit 302 associated with the first portion of the first DQS cycle 320 appears as the first bit. Similarly, the 0 bit 304 associated with the second half of the first DQS cycle 320 appears as the second bit. The remaining bits 306, 308, 310, 312 appear in sequence. Additional bits would continue in sequence for additional DQS cycles beyond the third illustrated 330.

Returning to FIG. 1, the demultiplexing component 14 can be used to bifurcate, separate, or de-interleave the incoming DDR data stream 12 into two SDR data streams 16, 18. The demultiplexing component 14 can be adapted to adjust the DDR data steam using a plurality of methods. In some embodiments, a DDR data input is turned into a sequential SDR data stream, where bit information is transmitted on only one portion of a DQS signal. Because DDR data can be conveyed with both the first and second halves of a DQS clock cycle, such a resulting SDR data stream would have to operate at twice the DQS frequency in order to transmit the same amount of data in the same amount of time as the DDR data stream. Preferably, the demultiplexing component 14 can bifurcate the DDR data stream 12 into two parallel SDR data streams.

Selection of bits for generation of the SDR data streams 16, 18 can occur in any suitable manner. In some embodiments, the first and second SDR data streams can convey a number of sequential bits from the DDR data stream in an alternating manner, based on the same DQS cycle. As an example, with reference to FIG. 3, the first SDR data stream could sequentially comprise the bits 302, 304 associated with the first DQS cycle, while the second SDR data stream could sequentially comprise the bits 306, 308 associated with the second DQS cycle. Thus, for four input DDR bits, two output bits in each of two streams would be created over two DQS intervals, thereby preserving the data rate of the DDR input.

As described, any of several methods of bifurcating the DDR data stream can be used. FIG. 4 illustrates non-limiting exemplary output of a demultiplexed sequence 300. A first SDR data stream 340 contains a sequence of bits composed of the first of the two bits of information from each DQS cycle. Thus, the bit information from the first half of the first DQS cycle 320, a 0 bit 302, comprises the bit information for the first bit in the first SDR data stream 340. Similarly, the bit obtained from the first half of the second DQS cycle 325, a 1 bit 306, comprises the bit information for the second bit in the first SDR data stream 340, and can continue for as many bits as are present in the DDR data stream. Conversely, the bit information from the second half of the first DQS cycle signal 320, a 0 bit 304, comprises the first bit in the second SDR data stream 350, and so on.

Accordingly, the DDR data stream can be demultiplexed by creating two SDR data streams wherein the bit information for each SDR data stream is obtained from alternating halves of the DQS cycle of the DDR data stream. Thus, a first SDR data stream can comprise the bits associated with the first half of all DDR DQS cycles and a second SDR data stream can comprise the bits associated with the second half of all DDR DQS cycles. The selection of bits from certain halves of the DQS cycle and association with certain SDR data streams can be selected by the demultiplexing unit or a user, and neither necessarily corresponds to a particular data stream or half of a DQS cycle.

Thus, with reference back to FIG. 1, the first SDR data stream 16 can comprise only the bits from the first or second half of a DQS cycle. The other half of each DQS cycle can be provided to the second SDR data stream 18, thereby producing two SDR data streams at the same DQS frequency as the DDR data input 12. In the illustrated example, the bits from second half of each DQS cycle comprise the first SDR data stream 16, while bits from the first half of each DQS cycle comprise the second SDR data stream 18. The DQS halves and corresponding SDR data streams can be different in different embodiments.

After the DDR data input 12 has been demultiplexed, split, or bifurcated by the demultiplexing component 14 into two SDR data streams 16, 18, the first SDR data stream 16 is provided to both the first input 52 of the first AND gate 50 and the first delay component 20, whereas the second SDR data stream 18 is provided to the second delay component 22. The first delay component 20 delays the data as the once-delayed first SDR data stream 22 and the second delay component 30 performs the same operation to create the once-delayed second SDR data stream 32.

The once-delayed first SDR data stream 22 can be provided to the third input 56 of the first AND gate 50, the second input 64 of the second AND gate 60, and the data processing component 80, on two inputs 81, 84. The once-delayed second SDR data stream 32 can be provided to the second input 54 of the first AND gate 50, the first input 62 of the second AND gate 60, the data processing component 80, and the third delay component 40. The third delay component 40 can delay the data stream to create the twice-delayed second SDR data stream 42. The twice-delayed second SDR data stream 42 can be supplied to the third input 66 of the second AND gate 60 and the data processing component 80.

The logic architecture can be configured to detect a predetermined bit sequence or pattern in the DDR data stream 12. In the illustrated embodiment, a bit pattern of "101" is used, though other sequences can also be used. Thus, although the two AND gates 50, 60 and the OR gate 70 are used in the present embodiment, a different logic architecture can be constructed to detect different sequences, such as "1010" or "1001" or "110011" or "010" and so on. Preferably, a shorter pattern or sequence is used to reduce the number of meta-information bits in the DDR data stream, as opposed to information bits.

In the illustrated embodiment, the "101" pattern is detected by the first and second AND gates 50, 60, as a result of the two regular AND gate inputs and the middle, inverted input. Two AND gates 50, 60 are used because the 101 sequence can begin in either the first or second SDR data streams 16, 18 after demultiplexing.

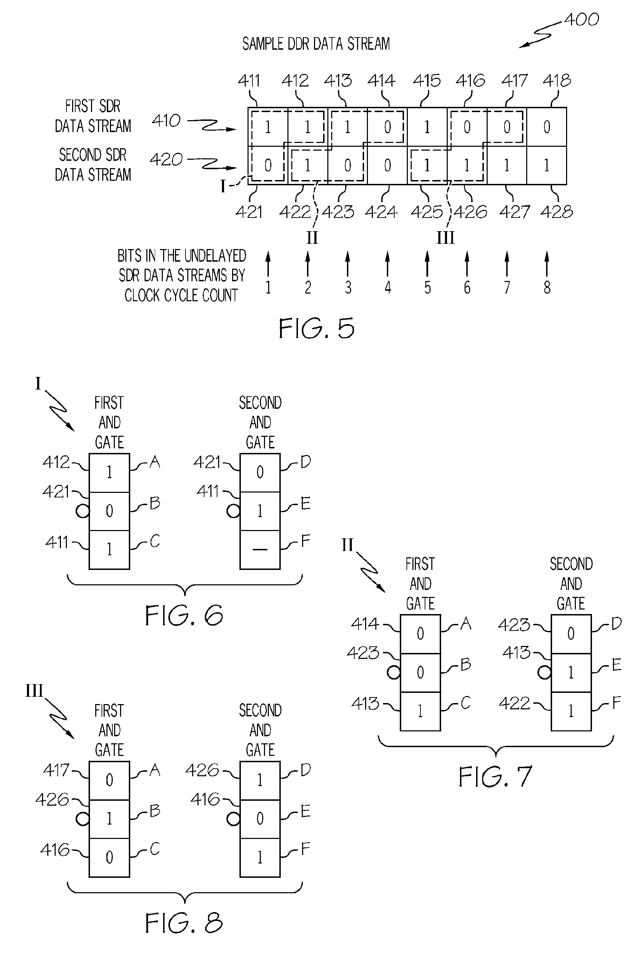

With reference to FIG. 5, a sample portion of a DDR data stream 400 is shown. In the sample portion 400, a first SDR data stream 410 contains a sequence of bits 411, 412, 413, 414, 415, 416, 417, 418 which the data source generated and transmitted as a stream. In some embodiments, this bit sequence can originate from the bits associated with the first or second half of a DQS cycle of a DDR data stream.

The second SDR data stream 420 can comprise a series of bits associated with the opposite half of a DQS cycle of the DDR data stream with which bits from the first SDR data stream 410 were associated. As one non-limiting example, if the first bit 411 in the first SDR data stream 410 is associated with the first half of the first DQS cycle, the first bit 421 of the second SDR data stream 420 can be associated with the second half of the first DQS cycle. Thus, as one non-limiting example, in the embodiment illustrated in FIG. 1, the second SDR data stream 420 would correspond to the second SDR data stream 18, comprising the data from data source 10. After demultiplexing, the first SDR data stream 16 would correspond to the upper bits 410, having a sequence "11101000", and the second SDR data stream 18 would correspond to the lower bits 420, having a sequence "01001111".

With reference back to FIG. 1, the delay components 20, 30, 40 are arranged to allow the AND gates 50, 60 to simultaneously compare bits from different portions of the DDR data stream 12. With the example of the sample stream portion 400, the values provided to the two AND gates 50, 60 are shown in FIG. 6 after two clock cycles of the system. As can be seen, the first grouping I of the stream portion 400 is matched with the input labels A, B, C, D, E, and F of the AND gates 50, 60. Thus, the F input is not populated from the stream portion 400 because the twice-delayed second SDR data stream 42 has not yet received data information.

As can be seen, however, a 101 pattern is present in the alternating SDR data streams, as shown in the first grouping I. Specifically, the first bit 411 in the first SDR data stream 410 is a 1, the first bit 421 in the second SDR data stream 420 is a 0, and the second bit 412 in second SDR data stream 420 is a 1. After one clock cycle, the first bit 411 of the first SDR data stream 410 is present in the once-delayed first SDR data stream 22, and supplied to the third input 56 (C) of the first AND gate 50. Similarly, the first bit 421 of the second SDR data stream 420 is present in the once-delayed second SDR data stream 32 and supplied to the second or middle input 54 (B) of the first AND gate 50. Finally, the second bit 412 of the first SDR data stream 410 is present in the first SDR data stream 16 and supplied to the first input 52 (A) of the first AND gate 50. Accordingly, the first AND gate 50 is receiving a sequence of bits which satisfy its logical operation, and it will generate a logic high value at the output 58. Additionally, because the first "1" bit in the "101" sequence occurred in the first SDR data stream 16, 410, the first AND gate 50 detects the pattern, instead of the second AND gate 60.

The first grouping I of bits also provides some input to the second AND gate 60. Because no bits from the first grouping I are present in the twice-delayed second SDR data stream 42, the third input 66 (F) of the second AND gate 60 has not yet received data from the DDR data stream. As can be seen, regardless of the state of the third input 66 (F), the logical operation of the second AND gate 60 would not be satisfied, and no signal would be sent.

FIG. 7 illustrates the bit distribution among the first and second AND gates 50, 60 of the second grouping II of bits from the sample DDR data stream portion 400 of FIG. 5. As can be seen, neither AND gate 50, 60 has its logical operation met, and neither will output a logic high value. The twice-delayed second SDR data stream 42, however, has had enough clock cycles to begin conveying bits, and provides the second bit 422 of the second SDR data stream 420. Accordingly, three clock cycles have passed since the first bits 411, 421 were demultiplexed into corresponding SDR data streams.

FIG. 8 illustrates the disposition of the third grouping III of bits from the same DDR data stream portion 400 to the AND gate inputs as shown. As can be seen, a "101" pattern is present in the SDR data streams providing inputs to the second AND gate 60. These bits begin with a "1" bit in the second SDR data stream 18, 420, the fifth bit 425. A "0" follows as the sixth bit 416 of the first SDR data stream 16, 410, and the finishing "1" bit is again in the second SDR data stream 18, 420, its sixth bit 426. Thus, with configuration of both AND gates 50, 60, the predetermined bit sequence can begin in either of the first or second SDR data streams 16, 410, 18, 420.

Thus, the two AND gates 50, 60 can detect the predetermined bit sequence with a starting bit occurring in either the first or second SDR data streams 16, 18. Additionally, the first AND gate 50 can supply a logic high value to the first multiplexer's "1" input 90. As can be seen, the OR gate 70 can be configured to provide a logic high value to the fourth delay component 110 in response to receiving a logic high value from either AND gate 50, 60. The output of the OR gate 70 can also be supplied to the "1" input of the second multiplexer 100.

The multiplexers 90, 100 can both receive a selector signal from a train signal source 130, as described above. Accordingly, when a logic high value on the train signal 132 is supplied to the multiplexers 90, 100, the output of the multiplexers 90, 100 will correspond to the output of the first AND gate 50 and the OR gate 70, respectively. The output of the multiplexers 90, 100 can be the phase signal 122, as delayed by the fifth delay component 120. The phase signal 122 can be supplied as the switching signal for the data processing component 80, and the phase signal 122 can also be provided to the data aligning component 160.

In some embodiments, serial data is provided from the data source 10 in the form of the DDR data stream 12. Under certain circumstances, repetitive sequences of data sent through parallel lines can become skewed relative to each other. This occurs when variations in the line of transmission, owing to length, abnormalities, or transmitter processing speed, for example, alter the rates of transmission of serial data through the lines. With reference to FIG. 1, the data source 10 can be considered a source of such a serial data transmission. In the illustrated embodiment, the data source 10 would represent a single transmission of the data. Accordingly, the DDR data stream 12 can, under certain circumstances, be considered skewed data.

To de-skew the data, a group of bits known as a "data eye" can be located. The data eye is a group of bits furthest from the boundaries of the sequence of bits of interest, known as a tap. Thus, for each tap, a bit halfway or approximately halfway, between the beginning and end of the data eye is the center. As part of the de-skewing process, locating the data eye can be accomplished by sequencing the tap and determining its center. Additionally, by evaluating information regarding the boundaries between data taps, the data aligning component 160 can determine the center of each tap and align the data for useful processing and/or recording. Accordingly, designating the beginning or ending of taps can be useful for locating the data eye.

During operation, an initial, preconfigured training DDR data stream comprising the predetermined pattern or sequence of bits can be provided from the data source 10. The predetermined sequence can be "101"" in the DDR bit stream, beginning on the SDR data stream (once demultiplexed) that is associated with the rising or falling edges of the DDR data stream. Preferably, the predetermined sequence corresponds to the logic architecture for the embodied system 1. While the training DDR data stream is being provided from the data source 10, the train signal source 130 can provide the train signal 132 to the first and second multiplexers 90, 100. Accordingly, the "1" inputs for the multiplexers 90, 100 will be transmitted from their respective outputs 92, 102.

During the training operation, as defined by the duration of the training DDR data stream, the predetermined sequence of bits can be deliberately spaced to occur during a regular, repeating pattern. One example of such a pattern is the 101 sequence followed by 8 sequential bits, followed by another 101 sequence, and repeating. Another such pattern can have 16 intervening sequential bits, and so on. Each time the 101 pattern occurs with the initial 1 bit in the first SDR data stream 16, after a clock cycle, the first AND gate 50 will provide a logic high value to both the OR gate 70 and the first multiplexer 90, as shown. In turn, the OR gate 70 will provide logic high value to the second multiplexer 100 and the fourth delay component 110. The fourth delay component 110 will produce the sequence detection signal 112 to the data aligning component 160, providing indication to the aligning component 160 that the predetermined sequence has been detected.

Additionally, because the fifth delay component 120 will receive a bit or indicator from the first AND gate 50, through output signal 92 of the first multiplexer 90, a phase signal 122 will also be transmitted to the data aligning component 160. The phase signal 122 will also cause the data processing component 80 to select a set of input for transmission to the data aligning component 160 as the first and second output SDR data streams.

The first and second output SDR data streams will correspond to the appropriate phase of the pattern. Thus, when the predetermined sequence is detected with a first 1 bit in the first SDR data stream, the first and second SDR data streams will be transmitted to the data aligning component 160 in the same configuration as which they were demultiplexed.

If a logic high value on the phase signal 122 is not present, however, the data processing component 80 can invert the phase of the SDR data streams 180, 182, by providing the data from the once-delayed first SDR data stream 22 as the second output SDR data stream 182 and the data from the twice-delayed second SDR data stream 32 as the first output SDR data stream 180. Thus, the first output SDR data stream 180, in the latter case, would be also once-delayed, as compared to the second output SDR data stream 182, resulting proper precession of data. The data precession is correct because, in the latter case, the first 1 bit of the predetermined sequence was detected in the second SDR data stream 18, and the corresponding output SDR data streams 180, 182 thereafter transmit the first bit following the 101 pattern on the first output SDR data stream 180, resulting in immediate presentation to the data aligning component 160 of the bits between the predetermined sequences.

After several iterations of the predetermined bit sequence, the data aligning component 160 can determine the appropriate spacing between occurrences of the bit sequences, such as 8 bits, corresponding to an 8-bit data word or data tap, 16 bits, indicating a 16-bit data word or data tap, and so on. After the training sequence is complete, the data source 10 can provide prepared data conveying data words or data taps with the predetermined bit sequence interposed between data words or data taps. The same data source 10 - such as a wire, network connection, port, or any other device - can be used for both transmission of the training pattern and the prepared, or live, data, or the data source 10 can be changed after training.

When the live or prepared data is provided to the system 1, a logic high value on the train signal 132 is discontinued and the multiplexers 90, 100 revert to providing their 0 input. The effect of this change will be described in more detail below. As the first AND gate 50 can no longer provide data or information through the first multiplexer 90, only the OR gate 70 will produce a logic high value in response to detection by either AND gate 50, 60 of the predetermined sequence. Additionally, logic values from the OR gate 70 will no longer be selected by the second multiplexer 100. Thus, the OR gate 70 will provide the sequence detection signal 112, but a logic high value from the OR gate 70 not produce a logic high value on the phase signal 122. Consequently, once the system 1 has been prepared with the training DDR data stream, it is configured to receive live data and perform data alignment and de-skew operations on the live data.

During the course of transmission of the live data, SDR data streams 16, 18 can be inspected for occurrences of the predetermined bit sequence. Through the method described above, a logic high value on the sequence detection signal 112 will be transmitted to the data aligning component 160 synchronously with the occurrence of the predetermined bit sequence in the DDR data stream 12. Accordingly, the data aligning component 160 can align the data, as described below, with input regarding the beginning and end bits of data between the predetermined bit sequences. The alignment of data can account for variations in the number or placement of delay components in different embodiments of the system 1. Such compensation can be specific to each system and hardwired or hardcoded into a specific data aligning component or vary between systems and be updated for configurable data aligning components.

Some data may not conform precisely to the boundaries of data words or data taps established by the training DDR data stream because of skew in the data. For example, the predetermined bit sequence in the live data may occur with only 7 bits between repetitions, or with 9 bits between repetitions, instead of the 8 bits, or an 8-bit bit length, established by the training DDR data stream. Because the data aligning component 160 has been provided the training data, it can buffer at least some of the first and second output SDR data streams 180, 182 and compare the expected result derived from the training data with the actual data. Where, for example, only 7 bits are provided where 8 are expected, the data aligning component 160 can discard the 7 bits and recalibrate based on the predetermined bit sequence for the next range of bits, or bit length, that can contain a data word or data tap. Similarly, where 9 bits appear between predetermined bit sequences, all 9 bits can be discarded.

Consequently, where the data has become skewed, the data aligning component 160 can use the combination of the training data and the predetermined pattern to properly frame the data words or data taps. Such framing can also be considered establishing the boundary between data segments, such as data words or taps. As a result, the center of the tap can be determined, and de-skew of the data results.

Data processing can be paused. During such a pause or hiatus, it is advantageous to store certain states of the system, called alignment data or alignment information, such as whether the phase signal was sent or not, and where, relative to a predetermined bit pattern, the data stream was paused. Such information can be stored and returned to the system through the use of the phase in signal source 152 and the config signal source 140. Subsequent resumption of data processing as informed by the alignment information or data can be considered using the stored alignment information to establish boundaries between the data segments as data words or taps.

During a state of operation when the train signal 132 is at a logic low value, the phase signal 122 will have a logic low value, unless a logic high value is present on the phase signal 152 or config signal 142. The multiplexers 90, 100 can also receive input on their 0 inputs from the phase in signal source 150 and config signal source 140, respectively. Thus, when operation is resumed after a pause, the signal sources 140, 150 can be configured to provide correct synchronizing information to permit continuation of data aligning.

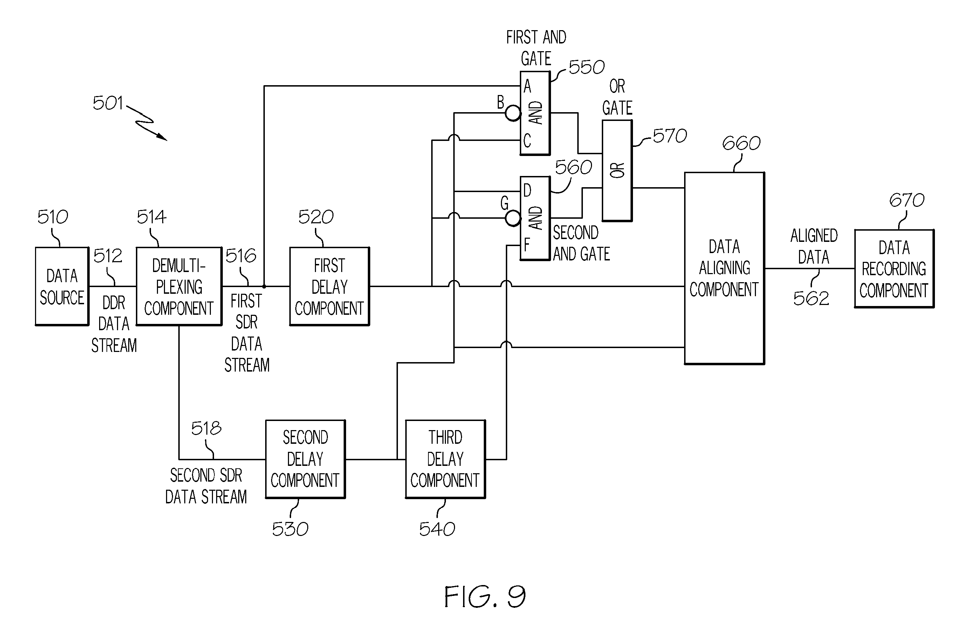

With reference to FIGS. 1 and 9, in some embodiments, the data processing component 80, the multiplexers 90, 100, some delay components, including the fourth and fifth delay components 110, 120, some signal sources, and the data aligning component 160 can be realized as a single component 660. Unless otherwise specified, the system 501 of FIG. 9 is similar to that of FIG. 1, except the component indicator numbers have been incremented by 500. The data aligning component 660 can perform with software or integrated hardware components some or all of the other functions of the individual components of FIG. 1. In other embodiments, other combinations, such as a combined data aligning and data recording component are also possible. In some embodiments, more components can be integrated, such as the demultiplexing component and some of the delay components, into a single component with multiple output ports. Thus, although illustrated as separate components, the elements of FIG. 1 can be integrated and/or combined as advantageous for practice of the system, such as comprising some portions of an integrated circuit.

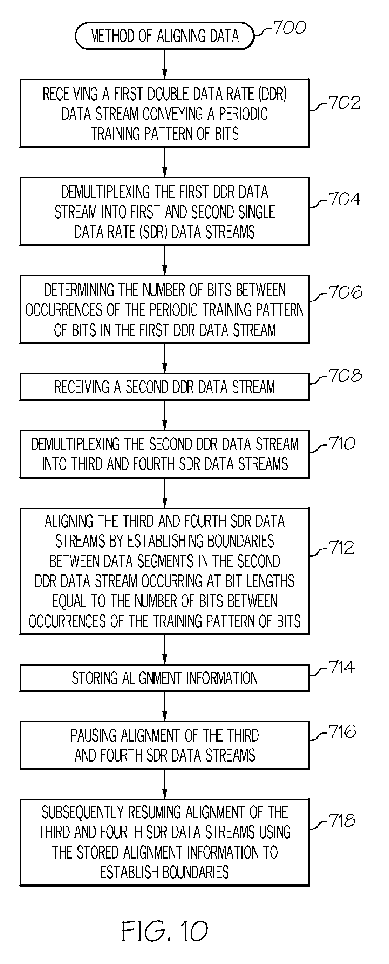

FIG. 10 is a flow chart that illustrates an embodiment of a data processing method 700. The various tasks performed in connection with method 700 may be performed by software, hardware, firmware, or any combination thereof. For illustrative purposes, the following description of method 700 may refer to elements mentioned above in connection with FIGS. 1-9. In practice, portions of method 700 may be performed by different elements of the described system, e.g., a data stream demultiplexing component 14, a delay component, or a data recording component 170. It should be appreciated that method 700 may include any number of additional or alternative tasks, the tasks shown in FIG. 10 need not be performed in the illustrated order, and method 700 may be incorporated into a more comprehensive procedure or process having additional functionality not described in detail herein.

As described above, in accordance with one embodiment, the system can be used to align data. Initially, an embodiment of the system can receive 702 a first double data rate (DDR) data stream conveying a periodic training pattern of bits. Such a DDR data stream can be the training data stream described above, and the periodic training pattern of bits can correspond to the predetermined bit sequence or pattern. After receiving 702 the DDR data stream it can be demultiplexed 704 into first and second single data rate (SDR) data streams. The first and second SDR data streams can be inspected to determine 706 the number of bits between occurrences of the periodic training pattern of bits in the first DDR data stream. As described above, such a number of bits can be termed the bit length between occurrences of the predetermined bit sequence. Such determining can be performed by components like the logic architecture and data aligning component.

After the determination of bit length has been made, a second DDR data stream can be received 708 by at least part of the system. The second DDR data stream can be demultiplexed 710 into third and fourth SDR data streams. The system can then align 712 the third and fourth SDR data streams by establishing boundaries between data segments in the second DDR data stream occurring at bit lengths equal to the number of bits between occurrences of the training pattern of bits or predetermined bit sequence. During the establishment of such boundaries, the predetermined bit sequences can be removed and only the "data bits" or bits of interest in the tap considered.

During operation of some systems, the alignment information in use by the system, such as the phase signal state, can be stored 714 into a memory device or devices. The data alignment of the third and fourth SDR data streams can then be paused 716, either in reaction to a pause in the second DDR data stream or in response to another indicator. The system can subsequently resume 718 alignment of the third and fourth SDR data streams using the stored alignment information to establish boundaries.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A system (1) for aligning data, the system (1) comprising:
a demultiplexing component (14) adapted to bifurcate a double data rate (DDR) data stream (12) into a first single data rate (SDR) data stream (16) and a second SDR data stream (18);
a delay architecture (20, 30, 40) coupled to the demultiplexing component (14), and adapted to generate a once-delayed first SDR data stream (22) from the first SDR data stream (16), a once-delayed second SDR data stream (32) from the second SDR data stream (18), and a twice-delayed second SDR data stream (42) from at least one of the second SDR data stream (18) and the once-delayed second SDR data stream (32);
a logic circuit (50, 60, 70) coupled to at least one of the delay architecture (20, 30, 40) and the demultiplexing component (14), and adapted to analyze the first SDR data stream (16), the once-delayed first SDR data stream (22), and the once-delayed second SDR data stream (32) to detect a predetermined bit pattern conveyed in the DDR data stream (12) and to indicate detection of the predetermined bit pattern; and
a data aligning component (160) coupled to the delay architecture (20, 30, 40) and the logic circuit (50, 60, 70), the data alignment component (160) being adapted to determine the number of intervening bits between occurrences of the predetermined bit pattern and to frame the intervening bits, thereby producing aligned data (162).

2. The system (1) of Claim 1, wherein the logic circuit (50, 60, 70) is further adapted to analyze the once-delayed first SDR data stream (22), the once-delayed second SDR data stream (32), and the twice-delayed second SDR data stream (42) to detect the predetermined bit pattern conveyed in the DDR data stream (12) and to indicate detection of the predetermined bit pattern.

3. The system (1) of Claim 2, wherein the data aligning component (160) is further adapted to determine the number of intervening bits between occurrences of the predetermined bit pattern and to frame the intervening bits, thereby producing aligned data (162).

4. The system (1) of Claim 1, wherein the DDR data stream (12) comprises a data signal and the first SDR data stream (16) comprises bits associated with a first portion of a data signal of the DDR data stream (14).

5. The system (1) of Claim 4, wherein the second SDR data stream (18) comprises bits associated with a second portion of the data signal of the DDR data stream (14).

6. The system (1) of Claim 1, further comprising a data recording component (170), the data recording component (170) coupled to the data aligning component (160) and adapted to receive and record the aligned data (162).

7. A method of aligning data, the method comprising:
receiving a double data rate (DDR) data stream (12);
demultiplexing the DDR data into first and second single data rate (SDR) data streams (16, 18);
delaying the first and second SDR data streams (16, 18) to create a once-delayed first SDR data stream (22) and a once-delayed second SDR data stream (32);
delaying the once-delayed second SDR (32) data stream to create a twice-delayed second SDR data stream (42);
inspecting the first SDR data stream (16), the once-delayed first SDR data stream (22), and the once-delayed second SDR data stream (32) to detect a predetermined bit pattern conveyed in the DDR data stream (14); and
establishing a segment of valid data in the DDR data stream (14) in response to detecting the predetermined bit pattern.

8. The method of Claim 7 further comprising inspecting the once-delayed second SDR data stream (32), the once-delayed first SDR data stream (22), and the twice-delayed second SDR data stream (42) to detect the predetermined bit pattern.

9. The method of Claim 9, wherein establishing the boundaries of valid data comprises fixing a boundary in the DDR data stream (14) in response to detecting the predetermined bit pattern.

10. A method of de-skewing data comprising:
receiving a first double data rate (DDR) data stream (14) that conveys a periodic training pattern of bits;
demultiplexing the first DDR data stream (14) into first and second single data rate (SDR) data streams (16, 18); and
determining the number of bits between occurrences of the periodic training pattern of bits in the first DDR data stream (14);
thereafter, receiving a second DDR data stream;
demultiplexing the second DDR data stream into third and fourth SDR data streams;
inspecting the third and fourth SDR data streams to detect occurrences of the training pattern of bits; and
aligning the third and fourth SDR data streams by establishing boundaries between data segments in the second DDR data stream occurring at bit lengths equal to the number of bits between occurrences of the periodic training pattern of bits.
